# EUROPEAN PATENT APPLICATION

(11) **EP 2 764 908 A1**
(43) Date of publication of application: **13.08.2014**
(21) Application number: 12834917.2
(22) Date of filing: 14.08.2012
(51) Int. Cl.: B01D 69/02, B01D 67/00, B01D 69/10, B01D 69/12, B01D 71/02, B01D 71/10, B01D 71/52, B01D 71/64, B01D 71/70

(54) **GAS SEPARATION MEMBRANE, METHOD OF PRODUCING THE SAME, AND GAS SEPARATION MEMBRANE MODULE USING THE SAME**

(30) Priority: 30.09.2011 JP 2011217159
(71) Applicant: Fujifilm Corporation, Minato-ku Tokyo 106-8620 (JP)
(72) Inventor: ISHIZUKA, Kenichi, Ashigarakami-gun Kanagawa 258-8577 (JP); ITOU, Shigehide, Ashigarakami-gun Kanagawa 258-8577 (JP)
(74) Representative: HOFFMANN EITLE
(86) International application number: PCT/JP2012/070680
(87) International publication number: WO 2013/046975

(57) **Abstract**

A gas separation membrane, containing:
a support; and
a separating layer formed on the support, the separating layer containing a resin;
the separating layer containing, at the side thereof opposite to the support, a hydrophilic modification treatment surface, the hydrophilic modification treatment surface involved in a layer having a film thickness of 0.1 µm or less, and the hydrophilic modification treatment surface provided with a surface contact angle measured by using water thereon in the range of 60 degrees or less.

## Description

### TECHNICAL FIELD

The present invention relates to a gas separation membrane, a method of producing the same, and a gas separating membrane module using the same.

### BACKGROUND ART

There is a separation membrane constituted of a specific polymer compound to perform in selective permeation of a desired gas component and thereby separating it. As an industrial application embodiment thereof, study has been conducted for separating and recovering carbon dioxide from a large-scale carbon dioxide source such as in a thermal power station, a cement plant, a blast furnace in a steel plant, in relation to a global warming issue. Then, this membrane separation technique attracts attention as a solution to an environmental issue to allow achievement by relatively small energy. Meanwhile, natural gas or bio gas (gases generated by fermentation and anaerobic digestion of excreta of organisms, organic fertilizers, biodegradable substances, polluted water, garbages, energy crops, and the like) is mainly a mixed gas of methane and carbon dioxide. Study has been made so far for use of the membrane separation method as a means for removing an impurity such as carbon dioxide therein (see Patent Literature 1, Patent Literature 2 and the like).

By the way, a considerable amount of moisture is contained in the mixed gas to which the separation operation as mentioned above is applied, and thus protection is required for the separation membrane thereto. From such a viewpoint, a proposal has been made for applying treatment for making a surface of a gas separation membrane hydrophobic (see Patent Literatures 3, 4). Alternatively, a proposal has been made for activating a surface of a membrane to perform graft treatment, thereby improving separation performance of the membrane (see Patent Literature 5).

### CITATION LIST

### Patent Literatures

Patent Literature 1: JP-A-2007-297605 ("JP-A" means unexamined published Japanese patent application)
Patent Literature 2: JP-A-2006-297335
Patent Literature 3: JP-A-08-24602
Patent Literature 4: Japanese Patent No. 2521884
Patent Literature 5: Japanese Patent No. 3668772

### SUMMARY OF THE INVENTION

### TECHNICAL PROBLEM

The present inventors paid attention to a technical problem upon particularly separating carbon dioxide from methane or the like, and conducted search analysis on various gas separating characteristics, a change of physical properties of a membrane, and separation behavior, and conducted research on a raw material or the like. Then, the present inventors ascertained that, as a factor influencing life of a gas separation membrane, not moisture but rather BTX (benzene, toluene, xylene organic components) involves in a mixed gas of this system. The present inventors confirmed that the influence is particularly significant in a membrane raw material utilizing a dissolution and diffusion mechanism as the gas separation membrane, and a separation membrane surface is modified into a hydrophilic surface in a specific embodiment, thereby allowing prolongation of membrane life while maintaining high gas separating characteristics.

In view of the above-described respects, the present invention addresses the provision of a gas separation membrane that can realize excellent gas permeability, a high gas separation selectivity and prolonged membrane life with regard to the separation of a mixed gas in which BTX is mixed. Further, the present invention addresses the provision of a method for producing the gas separation membrane, and a gas separating membrane module using the same.

### SOLUTION TO PROBLEM

The problems of the present invention can be solved by the following means.
(1) A gas separation membrane, containing:
   a support; and
   a separating layer formed on the support, the separating layer containing a resin;
   the separating layer containing, at the side thereof opposite to the support, a hydrophilic modification treatment surface, the hydrophilic modification treatment surface involved in a layer having a film thickness of 0.1 µm or less, and the hydrophilic modification treatment surface provided with a surface contact angle measured by using water thereon in the range of 60 degrees or less.
(2) The gas separation membrane as described item (1),
   wherein the layer constituting the hydrophilic modification treatment surface has a film thickness of 0.05 µm or less.
(3) The gas separation membrane as described in item (1) or (2),
   wherein the hydrophilic modification treatment surface is subjected to any treatment as described below:
   (i) plasma treatment, electron beam irradiation treatment, ultraviolet light irradiation treatment, ultraviolet light-ozone irradiation treatment, or corona discharge treatment;
   (ii) hydrophilic silane coupling agent treatment performed after the treatment of (i);
   (iii) vapor deposition or sputtering treatment by metal oxide; and
   (iv) chemical etching treatment.
(4) The gas separation membrane as described in any one of items (1) to (3),
   wherein the separating layer is formed of a polyimide resin, a cellulose resin, a polydimethylsiloxane resin, or a polyethylene glycol resin.
(5) The gas separation membrane as described in item (3) or (4),
   wherein a silicon-containing compound represented by formula A-1 below is provided for the modification treatment surface of the separating layer by the hydrophilic silane coupling treatment of (ii), 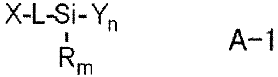 wherein X represents a functional group; L represents a linking group containing a carbon chain in a straight chain, a branched chain, or a cyclic chain; R represents a hydrogen atom or an alkyl group having 1 to 6 carbon atoms; Y represents a hydrolyzable group; m and n each represent an integer from 0 to 3; and the sum of m and n is 3.
(6) The gas separation membrane as described in item (3) or (4),
   wherein a metal oxide of silicon, aluminum, indium, titanium and/or tin is provided for the modification treatment surface of the separating layer by the vapor deposition and sputtering treatment by the metal oxide of (iii).
(7) The gas separation membrane as described in any one of items (1) to (6),
   wherein a difference (αᵢ - αs) between a surface contact angle (αₛ) of water on the hydrophilic modification treatment surface and a contact angle (αᵢ) of water on a surface of a separating layer base part not subjected to the treatment upon exposing the surface is 10 degrees or more.
(8) A method of producing a gas separation membrane containing a support and a separating layer formed on the support, having the steps of:
   forming a separating layer over the support; and
   applying any treatment below to the separating layer to form a hydrophilic modification treatment surface:
      (i) plasma treatment, electron beam irradiation treatment, ultraviolet light irradiation treatment, ultraviolet light-ozone irradiation treatment, or corona discharge treatment;
      (ii) hydrophilic silane coupling agent treatment performed after the treatment of (i);
      (iii) vapor deposition or sputtering treatment by metal oxide; and
      (iv) chemical etching treatment.
(9) A gas separating membrane module, having the gas separation membrane as described in any one of items (1) to (7).

### ADVANTAGEOUS EFFECTS OF INVENTION

According to the present invention as to a gas separation membrane, a method of producing the same, and a gas separating membrane module using the same, an excellent effect can be realized such as an excellent gas permeability, a high gas separation selectivity, long life to separation with regard to a mixed gas in which BTX is mixed.

Other and further features and advantages of the invention will appear more fully from the following description, appropriately referring to the accompanying drawings.

### BRIEF DESCRIPTION OF THE DRAWING

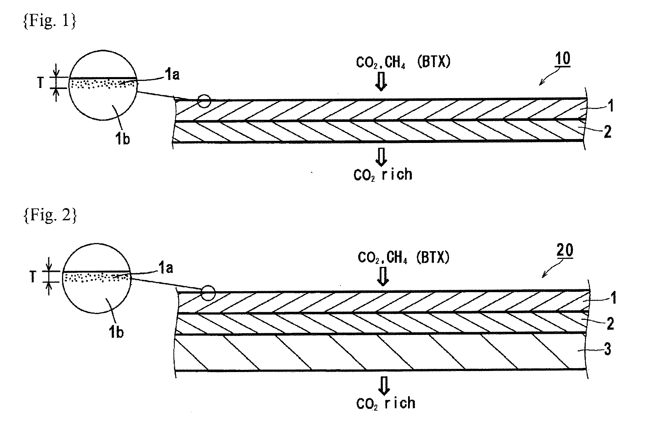

{Fig.1}
   Fig. 1 is a cross section schematically illustrating an embodiment of a gas separation composite membrane according to the present invention.
{Fig. 2}
   Fig. 2 is a cross section schematically illustrating another embodiment of a gas separation composite membrane according to the present invention.

### MODE FOR CARRYING OUT THE INVENTION

A gas separation membrane according to the present invention is a composite membrane having a support and a separating layer formed on the support and having a gas separation function, and the separating layer has a hydrophilic modification treatment surface. Hereinafter, the present invention is described in detail focusing on a preferred embodiment with referring to a drawing.

### [Constitution of Composite Membrane]

Fig. 1 is a cross-sectional view schematically showing a gas separation composite membrane 10, which is a preferred embodiment according to the present invention. The reference sign 1 is a gas separating layer and the reference sign 2 is a supporting layer constituted of a porous layer. Fig. 2 is a cross-sectional view schematically showing a gas separation composite membrane 20, which is a preferred embodiment according to the present invention. According to this embodiment, in addition to the gas separating layer 1 and the porous layer 2, a nonwoven fabric layer 3 is added as a supporting layer. In the composite membrane in such a form, a coating liquid (dope) forming the above-described gas separating layer is preferably coated at least on a surface of a porous support (in the specification, the term "coating" means inclusion of an embodiment in which the liquid is deposited on the surface by dipping), and the resultant coat is preferably hardened by an arbitrary method. Herein, an expression "over the supporting layer" means that any other layer may be interposed between the supporting layer and the gas separating layer. In addition, unless otherwise noted, with regard to expressions "over" and "under", a direction in which a gas to be separated is supplied is referred to as "over", and a direction from which a separated gas is discharged is referred to "under".

In gas separation composite membranes 10 and 20 according to the present embodiment, the gas separating layer has at the upper side thereof a surface subjected to hydrophilic surface modification (hydrophilic modification treatment surface) 1a. Remaining separating layer base part 1b exhibits a gas separation function, and in conjunction with a BTX shielding effect of the modification treatment surface 1a, realizes both excellent gas separation properties and long life of the membrane. Modification treatment for forming the hydrophilic modification treatment surface 1a is not particularly limited, but the separating layer 1 is formed as mentioned above, and then each treatment mentioned later is applied, thereby allowing the treatment, for example.

### (Modification treatment surface)

In the present embodiment, a surface modification surface only needs to be subjected to surface treatment at least partially on the above-described separation membrane surface within the range in which a desired effect is exhibited. The above-described surface modification surface is not particularly restricted, and after surface modification, a contact angle (αₛ) with water on an uppermost surface is defined to be 60 degrees or less, and is preferably 50 degrees or less. The lower limit thereof is not particularly provided, but practically is 4 degrees or more.

As a method for measuring the contact angle with water, a sessile droplet method can be selected. According to the sessile drop method, 1 to 4 µL of water is added dropwise on a membrane surface, and after the dropwise addition, an aspect of a liquid droplet after ten seconds is photographed as an image. On the occasion, contour shape of the image of the liquid droplet is presumed to be a part of circle, a center of the circle is determined, and thus an angle between a tangential line of the circle and a straight line can be determined as the contact angle. According to the necessity, measurement conditions or the like may be set up with reference to JIS R 3257.

A difference (αᵢ - as) between a surface contact angle (αₛ) of water on the hydrophilic modification treatment surface and a contact angle (αᵢ) of water on a surface of a separating layer base part not subjected to the treatment is not particularly limited, but hydrophilicity of a modification treatment surface 1a to a separating layer base part 1b is preferably relatively enhanced (Fig. 1, Fig. 2). For further quantitatively evaluating the difference, the difference (αᵢ - αₛ) between the contact angle (αₛ) of water on the hydrophilic modification treatment surface and the surface contact angle (αᵢ) of water on the surface of the separating layer base part not subjected to the treatment upon exposing the surface is preferably 10 degrees or more, and further preferably, 20 degrees or more. An expression "exposing the surface" refers to action in which the modification treatment surface 1a is excised so as to be stripped off from the separating layer 1 to form an exposed surface thereof. The contact angle (αᵢ) of water on the above-described separating layer base part refers to a value obtained by measuring the contact angle of water on the exposed surface, and a measuring method thereof is to be applied in accordance with the above-described method.

When the value (αᵢ - as) is 10 degrees or more, no clear effect on improvement of performance and life was not observed. The upper limit thereof is not particularly limited, but is practically 100 degrees or less.

### (Thickness of modification treatment surface)

In the above-described hydrophilic modification treatment surface (layer) of the separating layer, a film thickness T (see Fig. 1 and Fig. 2) in a depth direction of a part subjected to modification treatment is preferably 0.1 µm or less, further preferably, 0.08 µm or less, and particularly preferably, 0.05 µm or less. A metal oxide thin membrane is individually mentioned later, but commonly to any treatment, if a treatment region is too thin, a surface of a polymer substrate cannot be uniformly covered in a sufficient range, and if the region is too thick, gas transmission performance drops. Specific examples of surface modification treatment of a resin membrane include grafting utilizing a predetermined monomer, but according to this treatment, control of thickness in a treatment surface region is diffcult. For example, if monomer concentration of a coating liquid is increased for uniformly covering the surface, the membrane becomes excessively thick. Moreover, if the monomer concentration is reduced for thinning the membrane, the support is nonuniformly covered, and a desired effect cannot be obtained. Therefore, the grafting is hard as a preferred embodiment according to the present invention (see the after-mentioned Comparative Example). In the present invention, the thickness T of a construction region of the modification treatment surface does not need to have the above-described thickness over an entire surface thereof, and suitable thickness only needs to be realized within the range in which the advantageous effects of the present invention are not adversely affected. For example, 60% of modification treatment surface (in area) is within the above-described thickness range, and an area in any other part may exceed or be less than the above-described range. In addition, the lower limit of the film thickness T is not particularly limited, and according to dry treatment such as the after-mentioned plasma treatment, modification is made by an OH group being added to a polymer molecule constituting the resin. Consequently, the thickness T can be said to be over zero in terms of thickness, but the region can be evaluated as a state substantially having no thickness.

Unless otherwise noted, with regard to the membrane thickness or the surface modification surface (layer) thickness, a whole membrane including the support is frozen in liquid nitrogen, and then a cloven sample, or an ultrathin section sample prepared by cutting the whole membrane with an ultramicrotome or the like is analyzed through observation by TEM and SEM with high magnification. Moreover, in terms of a model, a mask or the like is used during surface modification, and a site with surface modification and a site without the modification are intentionally prepared, and a topographic difference of a topographic image by AFM may be regarded as the film thickness.

### (Surface modification treatment)

Specific examples of the surface modification methods include (i) plasma treatment, electron beam irradiation treatment, UV irradiation treatment, UV-ozone irradiation treatment or corona discharge treatment, (ii) a method of performing hydrophilic silane coupling agent treatment after the treatment of (i), (iii) vapor deposition or sputtering treatment by metal oxide; and (iv) chemical etching treatment. Among these methods, the method (ii) or (iii) is particularly preferred in view of obtaining a prominent hydrophilic effect and a small change over time.

### <(i- 1) Plasma treatment>

Plasma treatment to be applied to the present invention may be performed by a usual method. Specific examples of conventional methods include an embodiment in which low pressure plasma is utilized for generating stable plasma, and an object to be treated is treated in a large vacuum chamber. In these days, development has been made for an atmospheric pressure plasma treating device in which treatment under atmospheric pressure atmosphere is allowed. Gas mainly containing argon gas is introduced into a process chamber therein, and high density plasma can be stably generated under atmospheric pressure atmosphere. Specific examples of a system configuration of the atmospheric pressure plasma treating device include a constitution of a gas mixture and control unit, a reactor, and a carrying conveyer (or XY table). A proposal is also made for one for intermittently blowing a plasma jet off from a circular nozzle to perform treatment.

### <(i-2) Electron beam irradiation treatment>

In electron beam irradiation, an electron beam (EB) is utilized to artificially accelerate an electron and irradiate an object to be treated with the electron in the form of a beam. High energy of EB is utilized, thereby allowing modification of a surface into a desired state. EB is a kind of radiation, and can be electrically controlled and turning on and off is instantaneously allowed, which is different from radiation generated from an isotope. A powerful electron beam has an advantage of easiness to control in comparison with any other energy including a heat ray for treatment. An EB irradiation system is preferred due to high energy of the electron, capability of easy control of an amount of energy required by an object to be irradiated, and capability of managing an absorption dose (energy to be received by a material to be irradiated) .

A general electron beam irradiation device mainly constituted of an irradiation unit, a power supply unit and a control unit. The irradiation unit is a part in which EB is generated to allow drawing of a thermoelectron generated in a filament in a vacuum chamber by a grid, and further to allow acceleration of the electron by high piezo-electricify (70 to 300 kV) applied between a window and the grid. With regard to secondarily generated X-rays, safety is preferably ensured by safe shielding according to safe-shielding structure to prevent X-rays from influencing a working environment. One can be suitably used in which a high voltage power supply, a filament power supply and so forth for acceleration are arranged in the power supply unit, and a control system, various kinds of monitors, and so forth are arranged in the control unit.

### <(i-3) UV irradiation treatment >

Ultraviolet light (UV) ordinarily refers to an invisible electron beam having wavelength shorter than the wavelength of visible light (approximately 380 nm for purple to 780 nm for red). Further, the ultraviolet light is generally classified into UV-A (400 nm to 315 nm), UV-B (315 nm to 280 nm) and UV-C (280 nm to 200 nm) according to the wavelength thereof. Irradiation with this ultraviolet light (UV) is referred to as UV irradiation treatment. On the occasion, surface treatment of the object to be treated is preferably performed at least at 1 J/cm² or more in integrated irradiance. In the case where the integrated irradiance is more than the level, sufficient irradiation energy is obtained, and effective hydrophilizing treatment can be performed, and therefore such a case is preferred.

A typified constitution of UV irradiation device is as described below. As a UV lamp, an exclusive-use lamp for efficiently emitting ultraviolet light is adopted. Depending on the wavelength to be emitted, the lamp includes three types: a low pressure mercury lamp/a high pressure mercury lamp/a metal halide lamp, and is properly used according to application. Further, the device has the UV lamp and a reflector for allowing ultraviolet light to efficiently irradiate an object to be irradiated. As a cooling device, a device for forcedly cooling heat generated from the lamp is also suitably adopted. Further, a power supply device, a conveyer, a safety door and so forth are preferably applied.

### <(i-4) UV-ozone irradiation treatment>

As a typified principle of UV-O₃ treatment, ultraviolet light causes decomposition of an organic compound and generation of O₃, and strong oxidation in a process of the decomposition causes a change of the organic compound into a volatile substance (for example, water, carbon dioxide, and nitrogen) to perform surface modification. Main wavelength of ultraviolet light radiated from a publicly known low pressure mercury lamp is 184.9 nm and 253.7 nm, and when oxygen O₂ in air is irradiated with ultraviolet light having a wavelength of 184.9 nm, oxygen absorbs ultraviolet light to generate O₃ by a specific reaction. Moreover, ozone O₃ is irradiated with ultraviolet light having a wavelength of 253.7 nm, ozone absorbs the ultraviolet light, and decomposes. Atomic oxygen O is generated in the process of generation and decomposition of O₃, and this atomic oxygen O has powerful oxidizing power, thereby allowing surface modification of the object to be treated. As a UV-ozone irradiation device, one exemplified in the above-described UV irradiation can be utilized.

### <(i-5) Corona discharge treatment>

Corona discharge is a conventionally known phenomenon, and is a generic term for continuous discharge that takes place when a nonuniform electric field is generated around a sharp electrode (needle electrode). On the occasion, a light-emitting part appeared around the needle electrode is referred to as a corona. While an electric current that flows by corona discharge is small, and approximately several µA, the electric current allows effective increase of ion in gas. Light emission in a discharge path appears as limited to a circumference of the needle electrode on which the electric field is concentrated. Also in spark discharge, light emission appears prior to main discharge path formation.

Specific examples of the corona discharge treatment device typically include one for applying high frequency (approximately 40 kHz) and high voltage through a film between an insulated electrode and a dielectric roll to generate corona discharge. A gas component such as oxygen is converted into an active plasma state by this corona discharge, an accelerated electron in the corona discharge collides with a resin surface to cause molecular chain break and addition of oxygen-containing functional group on the resin surface. As a result, a polar group (OH group, a carbonyl group, and the like) is generated on the resin surface, thereby allowing modification of the surface of the object to be treated.

### <(ii) Method of performing silane coupling treatment>

In the case of only conducting the above-described treatment in (i), the contact angle with water may occasionally increase over time. On the other hand, a radical or a hydroxyl group exists on the surface after the treatment in (i), and therefore a silane coupling agent is coated, and further surface modification can be performed. A silicon-containing compound represented by formula A-1 below is utilized as the silane coupling agent, thereby allowing formation of a covalent bond such as metal (silicon)-oxygen-silicon-carbon for metal oxide or nitride. As a result, a base material surface can be coated with the functional group.

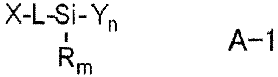

### • X

In formula A-1, X represents a functional group.

X is not particularly limited, if X has hydrophilicity, and a functional group such as an amino group, an amide group, a carboxyl group, a hydroxyl group, an aldehyde group, a methoxy group, a sulfonic acid group, an acetamide group, an epoxy group, an ureido group, and a sulfonic acid group or a combination thereof or a derivative thereof can be utilized.

Moreover, specific examples of a polymer containing a functional group reacting with a radical or a hydroxyl group include one having at a polymer terminal or in a side chain a functional group such as an amino group, a carboxyl group, a hydroxyl group, an aldehyde group, a thiol group, an isocyanate group, an isothiocyanate group, an epoxy group, a cyano group, a hydrazino group, a hydrazide group, a vinyl sulfone group and a vinyl group.

### • L

L represents a linking group (linker site) containing a carbon chain in a straight chain, a branched chain or a cyclic chain. Among them, an alkylene group, an ether group (-O-) or an amino group (-NR-, wherein R is a hydrogen atom or an alkyl group having 1 to 20 carbon atoms), and an alkylene group having 3 to 18 carbon atoms is further preferred. An alkylene group may be further accompanied by an arbitrary substituent.

### • R

In formula A-1, R represents a hydrogen atom or an alkyl group having 1 to 6 carbon atoms, more preferable a hydrogen atom or a methyl group.

### • Y

Y represents a hydrolyzable group.

Herein, specific examples of the hydrolyzable group (Y) include an alkoxy group, halogen and an acyloxy group, and more specifically a methoxy group, an ethoxy group, and chlorine.

Then, m and n each represent an integer from 0 to 3, and the sum of m and n is to be 3. Among them, n is preferably 1 or more.

Specific examples of the silicon compound represented by formula A-1 include glycidoxypropyl trimethoxysilane, triethoxysilylpropyl maleamic acid, ureidopropyl triethoxysilane, acetamidepropyl trimethoxysilane, triethoxysilylpropyl dihydroimidazole, triethoxysilylsuccinic anhydride, methylaminopropyl trimethoxysilane, polyethylene glycol trimethoxysilane, bis(2-hydroxyethyl)-3-aminopropyl triethoxysilane and 3-(trihydroxylyl)-1-propanesulfonic acid. A method of reaction of the silane coupling agent may be applied according to a general method. For example, a method described in a book "Effect and Using Method of Silane Coupling Agent" (Science & Technology Co., Ltd.) can be utilized. Specific examples include the above-described methods, but the present invention is in no way construed by being limited thereto.

### <(iii) Method for performing vapor deposition or sputtering of metal oxide>

As metal oxide, for example, metal oxide of silicon, aluminum, indium, titanium and tin can be used, and these may be used alone or in combination with two or more kinds thereof. SiO₂, Al₂ O₃, TiO₂, ITO, SnO₂, or a mixture thereof can be preferably used. A thin membrane of metal oxide may be a monolayer formed using the above-described material, a monolayer including as a component two or more kinds of the above-described materials, or a multilayer formed by stacking a plurality of these monolayers. A thin membrane of metal oxide including SiO₂ or SiO, or a thin membrane of metal oxide formed using a composition containing SiO₂ or SiO is particularly preferably arranged.

The thickness of the thin membrane of metal oxide can be appropriately set up. For example, when a thin membrane of SiO₂ or SiO is coated onto a surface of a polymer substrate by a vacuum deposition method, the thin membrane of metal oxide preferably has 10 nm to 50 nm. If the layer thickness is too thin, a surface of the polymer substrate cannot be completely and uniformly covered, and if the film thickness is too thick, gas transmission performance drops, or a crack or interlayer peeling takes place between metal oxide layers, and any case is not preferred.

A method of forming the thin membrane of metal oxide is not particularly limited, and for example, the thin membrane can be formed by physical vapor deposition, such as a vacuum deposition method or a sputtering process, a CVD method or plating. A vacuum deposition method can be preferably applied.

### <(iv) Chemical etching treatment>

As the above-described chemical etching treatment in (iv), an alkali metal is used, the above-described separating layer is modified, and thus hydrophilicity is provided.

Specific examples of organic alkali metal solutions used for the above-described chemical etching treatment include an organic solvent solution such as tetrahydrofuran solution of methyl lithium, a metallic sodium-naphthalene complex, or a metallic sodium-anthracene complex, and a solution of metallic sodium-liquid ammonia. Among these solutions, benzophenone, anthracene or biphenyl is preferably used as an aromatic anion radical.

### (Supporting layer)

The porous support preferably applied for the supporting layer is not particularly limited so long as it satisfies the provision of mechanical strength and high gas permeability, and it may be a porous membrane made of any organic or inorganic substance and is preferably an organic polymer porous membrane. The thickness thereof is preferably from 1 to 3,000 µm, more preferably from 5 to 500 µm, and further preferably from 5 to 300 µm. Regarding this fine pore structure of porous membrane, a mean pore diameter is ordinarily 10 µm or less, preferably 5 µm or less, and more preferably 2 µm or less, and a porosity is preferably from 20% to 90%, and more preferably from 30% to 90%. In addition, the gas permeability is preferably 3×10⁻⁵ cm³(STP)/cm²•sec•cmHg (30 GPU) or more, based on carbon dioxide permeation rate. Examples of the material for the porous membrane include conventionally known polymers, including polyolefin-based resins such as polyethylene and polypropylene; fluorine-containing resins such as polytetrafluoroethylene, polyvinyl fluoride, and polyvinylidene fluoride; and various resins such as polystyrene, cellulose acetate, polyurethane, polyacrylonitrile, polyphenyleneoxide, polysulfone, polyethersulfone, polyimide and polyaramide. Among them, from viewpoints of simultaneously attaining high membrane strength, high gas permeability, and separation selectivity, the supporting layer is preferably formed of polyacrylonitrile, polysulfone, or polyphenylene oxide. The shape of the porous membrane may be any of plate, spiral, tubular, or hollow fibers.

As mentioned above, this supporting layer being a thin and porous raw material is preferred due to capability of securing sufficient gas permeability. Moreover, the supporting layer is preferably in a thin membrane and porous form also for maximizing excellent gas separation selectivity of the gas separating layer as mentioned later. On the one hand, when severe reaction conditions such as a high temperature and long time are imposed on shaping of the gas separation membrane, the conditions may occasionally damage the above-mentioned thin and porous supporting layer not to allow development of sufficient performance as the composite membrane. From such a viewpoint, the gas separation composite membrane using the radically crosslinkable polyimide compound employed in the present invention can be formed under mild conditions, produce an excellent effect, and develop high performance in both of production competence and product quality.

In the present invention, in order to further provide the membrane with mechanical strength, a support is desirably formed in a lower part of the supporting layer for forming the gas separating layer. Specific examples of such a support include a woven fabric, a nonwoven fabric, and a net, and a nonwoven fabric is preferably used in view of membrane-forming properties and cost. As the nonwoven fabric, fibers formed of polyester, polypropylene, polyacrylonitrile, polyethylene, polyamide, or the like may be used alone or in combination with a plurality of fibers. The nonwoven fabric can be produced, for example, by paper making of main fibers and binder fibers that are uniformly dispersed in water, using a cylinder mold, a fourdrinier or the like, and drying the resultant product by a drier. Moreover, the nonwoven fabric is preferably interposed between two rolls and subjected to pressure heating processing for the purpose of removing fluff or improving mechanical properties.

### (Construction material of separating layer)

In the gas separation membrane according to the present invention, the separating layer is formed of resin, and specific examples of a material applied to this resin include the following materials, but the resin is not necessarily limited thereto. Specifically, the resin preferably includes polyimides, polyamides, celluloses, and polyethylene glycols.

More specifically, such resin can be selected as Matrimid sold under the trademark of Matrimid (registered trademark) by Huntsman Advanced Materials LLC (Matrimid (registered trademark) 5218 refers to a specific polyimide polymer sold under the trademark of Matrimid (registered trademark)), polyimides such as P84 or P84HT sold under trade name P84 and trade name P84HT by HP Polymers GmbH, respectively, celluloses such as cellulose acetate, cellulose triacetate, cellulose acetate butyrate, cellulose propionate, ethylcellulose, methyl cellulose and nitrocellulose, polydimethylsiloxanes, polyethylene glycols such as a polymer obtained by polymerizing polyethylene glycol #200 diacrylate (manufactured by SHIN-NAKAMURA CHEMICAL CO., LTD.), and a polymer described in JP-T-2010-513021.

### (Method for producing a gas separation membrane)

With regard to the gas separation membrane of the present invention, according to a method of producing the separation membrane having a support and a separating layer formed on the support, the separating layer is preferably formed on an upper side of the above-described support, and any treatment as described below is applied to the separating layer to form a hydrophilic modification treatment surface:
{(i) plasma treatment, electron beam irradiation treatment, UV irradiation treatment, UV-azone irradiation treatment, or corona discharge treatment;
{(ii) silane coupling agent treatment performed after the treatment of (i) :
{(iii) vapor deposition or sputtering treatment by metal oxide}; and
{(iv) chemical etching treatment}.

Details of each treatment of (i) to (iv) have been already mentioned in detail.

### (Method of Separating Gas Mixture)

The method of separating a gas mixture according to the present invention is a method of separating at least one acid gas from a mixed gas containing the at least one acid gas. The acid gas that can be separated by using the gas separation membrane or the gas separation composite membrane of the present invention is preferably carbon dioxide or hydrogen sulfide. Thus, the separation membrane according to the present invention includes a membrane for separating gas (gaseous matter), but may include a separation membrane for critical fluid or the like. Specific examples of target critical fluid include supercritical carbon dioxide.

In the method of separating gas using the separation membrane according to the present invention, a component of a gas mixture being a raw material is not particularly defined, but main components of the gas mixtures are preferably carbon dioxide and methane or carbon dioxide and hydrogen. The separating method exhibits particularly excellent performance under the coexistence of carbon dioxide and acid gas such as hydrogen sulfide as the gas mixture, and exhibits excellent performance preferably in separation of carbon dioxide and hydrocarbon such as methane, carbon dioxide and nitrogen, or carbon dioxide and hydrogen. Further, as mentioned above, the present invention exhibits a high effect in such a case of BTX being contained in the mixed gas to be separated, to maintain good gas separation properties, thereby allowing long life of the membrane.

Above all, a gas to be supplied is preferably a mixed gas of carbon dioxide and methane, a transmission rate of carbon dioxide at 40°C and 8 atmospheric pressure is preferably more than 10 GPU, more preferably from 10 to 500 GPU. A ratio of transmission rates (TR_{CO2}/TR_{CH4}) of carbon dioxide and methane is preferably 10 or more, more preferably 15 or more.

### (Gas Separating Membrane Module and Gas Separation Apparatus)

The gas separation membrane of the present invention is preferably a composite membrane using a porous support in combination, and a gas separating membrane module using the same is more preferred. Moreover, an apparatus for gas separation having means for separating and recovering or separating and purifying gas can be obtained by using the gas separation membrane, the gas separation composite membrane, or the gas separating membrane module of the present invention.

The gas separation membrane of the present invention is preferably used in the form of a module. Examples of the module include spiral, hollow, pleat, tubular, and plate and frame type. Moreover, the polymer membrane of the present invention may be applied to an apparatus for separating and recovering gas using a membrane/absorption hybrid method in conjunction with an absorption solution, for example, as described in JP-A-2007-297605.

### EXAMPLES

### (Example 1)

### <Production of separation membrane (101)>

A methyl ethyl ketone (MEK) solution containing 5% by mass of commercially available Matrimid 5218 (Matrimid (registered trademark)) 5218 refers to a specific polyimide polymer sold under the trademark of Matrimid (registered trademark), manufactured by Huntsman Advanced Materials LLC) was prepared as composition 101a, and a polyacrylonitrile porous membrane (the polyacrylonitrile porous membrane exists on a nonwoven fabric, and film thickness, including the nonwoven fabric, is approximately 180 µm, manufactured by GMT Membrantechnik GmbH) was used as a support, and the solution was coated on the support, and the resultant coat was dried. Then, as surface modification, UV-ozone treatment (treatment for 6 minutes using UV-ozone treatment apparatus (NL-UV253, manufactured by NIPPON LASER&ELECTRONICS LAB.) was performed, and thus separation membrane (101) was prepared.

### <Production of separation membrane (102)>

Separation membrane (102) was prepared in the same manner as Example 1 except that the surface modification was changed to one in which a toluene solution of triethoxysilylpropyl dihydroimidazole was coated after the above-described UV-ozone treatment, and the resultant coat was dried, and washed with methanol.

### <Production of separation membrane (103)>

Separation membrane (103) was prepared in the same manner as Example 1 except that the surface modification was changed to one in which an acetone solution of triethoxysilyl succinic anhydride was coated after the above-described UV-ozone treatment, and the resultant coat was dried, and washed with methanol and alkali.

### <Production of separation membrane (104)>

Separation membrane (104) was produced in the same manner as Example 1 except that the surface modification was changed to one in which SiO powder was subjected to resistance heating deposition under oxygen gas atmosphere.

### <Production of separation membrane (105)>

Separation membrane (105) was prepared in the same manner as Example 1 except that the separating layer was changed to commercially available cellulose acetate L70. In addition, a contact angle before the surface treatment of this separation membrane was 62 degrees.

### (Comparative Examples)

### <Production of separation membrane (c11)>

Separation membrane (c11) was prepared in the same manner as Example 1 except that the surface modification was not performed. In addition, a contact angle on a surface of a separating layer in this separation membrane can be evaluated as a surface contact angle of a separating layer base part upon exposing the surface in ones in Examples.

### <Production of separation membrane (c12)>

Separation membrane (c12) was prepared in the same manner as Example 1 except that the surface modification was changed to one in which a toluene solution of phenyldimethylchlorosilane was coated after the above-described UV-ozone treatment, and the resultant coat was dried, and washed with methanol.

### <Production of separation membrane (c13)>

Separation membrane (c13) was prepared in the same manner as Example 1 except that the surface modification was changed to one in which the resultant coat was impregnated into a 5% acrylamide aqueous solution after UV-ozone treatment, and subjected to electron beam irradiation, and then the resultant coat was washed with methanol.

### <Production of separation membrane (c14)>

Separation membrane (c14) was prepared in the same manner as Example 1 except that the surface modification was changed to one in which a 1% acrylic acid aqueous solution was coated after UV-ozone treatment, the resultant coat was subjected to electron beam irradiation, and then washed with methanol.

### -Gas separation evaluation 1-

Each separation membrane formed as described above was used, and carbon dioxide gas separation performance was evaluated as described below.

Each separation membrane including a support was entirely cut into a piece having a diameter of 47 mm, and the piece was interposed with a PTFE membrane filter to prepare a transmission test sample. To each sample (effective area 2.40 cm²) described above, a mixed gas of CO₂/CH₄: 50 / 50 (volume ratio) was fed as a test gas under a relative humidity of 0%, a flow rate of 300 mL/min, a temperature of 40°C, and a total pressure 200 kPa, Ar gas (flow rate 90 mL/min) was allowed to flow at the side of transmission. Gas transmitted through the membrane was analyzed by gas chromatography, and a CO₂ transmission rate and a separation factor were calculated. Values thereof are presented in Table 1.

### -Gas separation evaluation 2-

Separation performance was measured in the same manner as the gas separation evaluation 1 except that the gas composition was adjusted to be CO₂/CH₄/BTX: 40/40/20. Values thereof are presented in Table 2.

BTX: a mixture of benzene, toluene and xylene in an equal amount.

### -Contact angle evaluation-

Each separation membrane formed as described above was smoothed, water was used as target liquid, and a contact angle meter (DM-501) was used, and thus a surface contact angle was measured. Results thereof are presented in Table 1.

### -Modification treatment layer thickness (T)-

Thickness T was measured through observation by TEM or SEM as described above. However, a part of samples was measured through observation by AMF.

### -Membrane life-

In the gas separation evaluation 2, a reduction ratio of a separation factor after 10 hours was evaluated as a membrane life in the present invention.

**Table 1**

| Test object | Surface contact angle (degree) | Modification treatment layer thickness (µm) | Gas separation evaluation 1 | | Gas separation evaluation 2 | | Membrane life (reduction ratio%) |
|---|---|---|---|---|---|---|---|
| | | | Transmission flow rate Q(CO₂)^{*1} | Separation selectivity α^{*2} | Transmission flow rate Q(CO₂)^{*1} | Separation selectivity α^{*2} | |
| 101 | 42 | -^{*3} | 24 | 39 | 23 | 38 | 1.3 |
| 102 | 52 | 0.001^{*4} | 24 | 43 | 23 | 42 | 3.4 |
| 103 | 23 | 0.001^{*4} | 23 | 62 | 23 | 62 | 0.8 |
| 104 | 16 | 0.021 | 4 | 52 | 3 | 53 | 0.6 |
| 105 | 48 | -^{*3} | 8 | 56 | 8 | 54 | 1.1 |
| c11 | 92 | -⁻³ | 26 | 28 | 12 | 11 | 42 |
| c12 | 76 | 0.001^{*4} | 18 | 31 | 8 | 13 | 33 |
| c13 | 70 | 2.9 | 0.8 | 32 | 0.5 | 19 | 24 |
| c14 | 21 | 0.32 | 0.18 | 42 | 0.14 | 41 | 1.4 |

| | | | | | | | |
|---|---|---|---|---|---|---|---|
| *1 Transmission flow rate unit: 1×10⁻⁶ cm³(STP)/(s•cm²•cmHg) *2 α=Q(CO₂)/Q(CH₄) *3 A surface was hydrophilized in a molecular level, and therefore measurement of thickness was difficult, but the thickness is estimated to be 0.001 µm or less. *4 According to an AFM evaluation method using a mask | | | | | | | |

A lower surface contact angle is found to result in higher hydrophilicity and a further improved membrane life (see in comparison between Examples 101 to 105 and Comparative Examples c11 to c13). Then, c14 in Comparative Example presented good results in viewpoints of a membrane life and selectivity, but modification treatment layer thickness was large, and a transmission flow rate was 1 GPU or less, and therefore practicality substantially becomes low as a separation membrane.

In membrane sample c13, both the surface modification layer and the porous support were grafted, and thickness of a total surface treatment layer became excessively large. Therefore, a transmission flow rate significantly dropped.

### (Example 2)

### -Modularization-

A spiral module was prepared using the separation membrane prepared in Example 1 with reference to JP-A-5-168869. A separation membrane module prepared according to the present invention (Example) was confirmed to be good as same in the performance of the separation membrane build-in therein.

Having described our invention as related to the present embodiments, it is our intention that the invention not be limited by any of the details of the description, unless otherwise specified, but rather be construed broadly within its spirit and scope as set out in the accompanying claims.

This application claims priority on Patent Application No. 2011-217159 filed in Japan on September 30, 2011, which is entirely herein incorporated by reference.

### REFERENCE SIGNS LIST

1 Gas separating layer
1a Hydrophilic modification treatment surface (Hydrophilic modification treatment layer)
1b Separating layer base
2 Porous layer
3 Nonwoven fabric layer
10 and 20 Gas separation composite membrane

## Claims

1. A gas separation membrane, comprising:
a support; and
a separating layer formed on the support, the separating layer containing a resin;
the separating layer comprising, at the side thereof opposite to the support, a hydrophilic modification treatment surface, the hydrophilic modification treatment surface involved in a layer having a film thickness of 0.1 µm or less, and the hydrophilic modification treatment surface provided with a surface contact angle measured by using water thereon in the range of 60 degrees or less.

2. The gas separation membrane according to Claim 1,
wherein the layer constituting the hydrophilic modification treatment surface has a film of thickness 0.05 µm or less.

3. The gas separation membrane according to Claim 1 or 2,
wherein the hydrophilic modification treatment surface is subjected to any treatment as described below:
(i) plasma treatment, electron beam irradiation treatment, ultraviolet light irradiation treatment, ultraviolet light-ozone irradiation treatment, or corona discharge treatment;
(ii) hydrophilic silane coupling agent treatment performed after the treatment of (i);
(iii) vapor deposition or sputtering treatment by metal oxide; and
(iv) chemical etching treatment.

4. The gas separation membrane according to any one of Claims 1 to 3,
wherein the separating layer is formed of a polyimide resin, a cellulose resin, a polydimethylsiloxane resin, or a polyethylene glycol resin.

5. The gas separation membrane according to Claim 3 or 4,
wherein a silicon-containing compound represented by formula A-1 below is provided for the modification treatment surface of the separating layer by the hydrophilic silane coupling treatment of (ii), 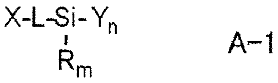 wherein X represents a functional group; L represents a linking group containing a carbon chain in a straight chain, a branched chain, or a cyclic chain; R represents a hydrogen atom or an alkyl group having 1 to 6 carbon atoms; Y represents a hydrolyzable group; m and n each represent an integer from 0 to 3; and the sum of m and n is 3.

6. The gas separation membrane according to Claim 3 or 4,
wherein a metal oxide of silicon, aluminum, indium, titanium and/or tin is provided for the modification treatment surface of the separating layer by the vapor deposition and sputtering treatment by the metal oxide of (iii).

7. The gas separation membrane according to any one of Claims 1 to 6,
wherein a difference (αᵢ - as) between a surface contact angle (αₛ) of water on the hydrophilic modification treatment surface and a contact angle (αᵢ) of water on a surface of a separating layer base part not subjected to the treatment upon exposing the surface is 10 degrees or more.

8. A method of producing a gas separation membrane containing a support and a separating layer formed on the support, comprising the steps of:
forming a separating layer over the support; and
applying any treatment below to the separating layer to form a hydrophilic modification treatment surface:
(i) plasma treatment, electron beam irradiation treatment, ultraviolet light irradiation treatment, ultraviolet light-ozone irradiation treatment, or corona discharge treatment;
(ii) hydrophilic silane coupling agent treatment performed after the treatment of (i);
(iii) vapor deposition or sputtering treatment by metal oxide; and
(iv) chemical etching treatment.

9. A gas separating membrane module comprising the gas separation membrane according to any one of Claims 1 to 7.
